# DEMANDE DE BREVET EUROPEEN

(11) **EP 0 995 478 A1**
(43) Date de publication de la demande: **26.04.2000**
(21) Numéro de dépôt: 99402596.3
(22) Date de dépôt: 20.10.1999
(51) Int. Cl.: B01D 53/04, C01B 3/50, C01B 13/02, C01B 21/04, C01B 23/00, F25J 3/08

(54) **Procédé de purification d'un fluide cryogenique comportant des impuretés N2O, CnHm et/ou Nox.**

(30) Priorité: 20.10.1998 FR 9813138
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny Le Bretonneux (FR); Moreau, Serge, 78140 Velizy Villacoublay (FR); Fournis, Dominique, 78470 St-Remy-Les-Chevreuses (FR)
(74) Mandataire: Conan, Philippe Claude

(57) **Abrégé**

L'invention concerne un procédé de purification d'un fluide cryogénique, notamment d'argon, d'azote, d'hélium ou d'oxygène, comportant des impuretés N₂O, CₙHₘ ou NOₓ, dans lequel on élimine les impuretés par mise en contact du fluide cryogénique à purifier avec des particules d'adsorbant ayant une taille moyenne inférieure ou égale à 1.5 mm, de préférence de 0.8 mm à 1.1 mm.

On récupère ensuite un fluide cryogénique purifié contenant moins de 100 ppb d'impuretés, de préférence moins de 10 ppb d'impuretés.

Ce procédé est utilisable pour produire des gaz ultra-purs destinés notamment au domaine de l'électronique.

## Description

La présente invention se rapporte à un procédé de purification d'un fluide cryogénique, tel l'azote, l'oxygène, l'hélium, l'hydrogène ou l'argon, en notamment ses impuretés N₂O, CₙHₘ et/ou NOₓ.

Les fluides cryogéniques, tels l'oxygène, l'azote l'hélium, l'hydrogène ou l'argon, présentent un grand intérêt industriel, notamment dans le domaine électronique.

Ainsi, il est courant d'utiliser de l'azote pour inerter ou refroidir les circuits imprimés durant leur procédé de fabrication et de l'hélium est souvent mis en oeuvre pour refroidir les fibres optiques chaudes.

Actuellement, les différents fluides cryogéniques sont obtenus par distillation cryogénique à partir d'air ambiant ou de mélanges gazeux les contenant ou par des techniques de séparation non-cryogéniques, par exemple par des procédés d'adsorption avec variations de pression, couramment appelés procédés PSA (Pressure Swing Adsorption), ou par perméation membranaire.

Cependant, pour certains applications, notamment dans le domaine électronique, le fluide cryogénique doit être de haute pureté, c'est-à-dire qu'il doit contenir des quantités minimales d'impuretés et autres contaminents indésirables, pour éviter que ces impuretés n'engendrent des réactions physico-chimiques indésirables et incompatibles avec le but recherché.

De là, il est usuel de procéder à des purifications très poussées des fluides cryogéniques, c'est-à-dire jusqu'à des niveaux de pureté inférieurs à quelques dizaine de ppb (parties par milliard), voire à 1 ppb.

A ce jour, de nombreuses méthodes de purification des fluides cryogéniques ont déjà été proposées.

Ainsi, on peut citer le document EP-A-662595 décrivant un procédé de préparation d'azote liquide de haute pureté, dans lequel on élimine les impuretés monoxyde de carbone, oxygène et hydrogène présentes dans de l'azote liquide par adsorption sur un matériau zéolitique ou de type oxydes métalliques poreux.

En outre, le document US-A-4,746,332 décrit l'élimination du monoxyde de carbone présent dans de l'azote liquide par adsorption sur une zéolite de type 5A.

Par ailleurs, EP-A-590946 enseigne une pré-purification par un procédé de type TSA (Temperature Swing Adsorption) du monoxyde de carbone présent dans de l'azote gazeux à une température de 90 K à 150 K, suivi d'une ultra purification par distillation subséquente de l'azote ainsi pré-purifié.

Le document EP-A-750933 concerne, quant à lui, une élimination du monoxyde de carbone et de l'oxygène présent dans de l'azote ou de l'argon liquide ou gazeux par adsorption sur un oxyde ou des oxydes de métal de transition, par exemple une hopcalite.

Par ailleurs, le document US-A-4,717,406 enseigne la purification d'un flux par filtration mécanique et adsorption sur un adsorbant notamment de type tamis moléculaire, charbon actif ou silice.

Le document WO-A-98/28226 préconise de purifier un fluide cryogénique, tel l'hélium, l'hydrogène ou l'argon, en ses impuretés par filtration mécanique des impuretés sous forme de cristaux et adsorption des impuretés sous forme dissoute ou gazeuse, de manière à obtenir un fluide purifié contenant moins de 1 ppb d'impuretés.

En outre, le document US-A-4,425,143 décrit une zéolite présentant des performances d'adsorption accrues et se caractérisant par un rapport Si/AI élevé pour résister aux acides et laquelle est exempte de Fe₂O₃.

Le document EP-A-747118 enseigne l'élimination des impuretés oxygène d'un gaz inerte au moyen d'un support imprégné d'un oxyde de métal alcalin ou alcalino-terreux.

Enfin, le document US-A-3,597,169 concerne un procédé d'élimination des impuretés méthane contenues dans de l'oxygène liquide par mise en oeuvre d'une zéolite X fortement échangée par des cations calcium ou argent.

En pratique, les particules d'adsorbant utilisées dans ces différents procédés ont habituellement une taille moyenne de l'ordre de 2 mm à 5 mm.

Or, si ces procédés permettent d'éliminer plus ou moins bien certaines des impuretés contenues dans les fluides cryogéniques, telles notamment les impuretés monoxyde de carbone, dioxyde de carbone ou encore oxygène, il apparaît que le problème de l'élimination efficace de certaines autres impuretés susceptibles d'être présentes en quantité plus ou moins importante dans les fluides cryogéniques n'a pas été résolu jusqu'alors ou alors seulement incomplètement.

Le but de la présente invention est alors d'améliorer les procédés existants en proposant un procédé de purification de fluide cryogénique permettant une élimination efficace, en particulier, des impuretés N₂O, CₙHₘ et/ou NOₓ susceptibles d'être présentes dans un fluide cryogénique, tel l'azote, l'oxygène, l'hélium, l'hydrogène ou l'argon.

Dans le cadre de la présente invention, par NOₓ , on entend NO et/ou NO₂ et par CₙHₘ, on entend un ou plusieurs hydrocarbures, tels les molécules à squelette carboné saturé ou insaturé.

La présente invention concerne alors un procédé de purification d'un fluide cryogénique comportant des impuretés choisies parmi N₂O, CₙHₘ (hydrocarbures) et NOₓ, dans lequel :
(a) on élimine au moins une partie des impuretés contenues dans le fluide cryogénique à purifier par mise en contact dudit fluide cryogénique à purifier avec des particules d'au moins un adsorbant, lesdites particules ayant une taille moyenne inférieure ou égale à 1.5 mm, et
(b) on récupère un fluide cryogénique purifié contenant moins de 100 ppb desdites impuretés, de préférence moins de 10 ppb desdites impuretés.

En effet, les inventeurs de la présente invention ont mis en évidence que la taille des particules d'adsorbants a une grande influence sur les performances, c'est-à-dire l'efficacité, du procédé de purification.

Comme montré dans les exemples ci-après, il apparaît qu'un effet bénéfique au niveau des performances du procédé peut-être obtenu en diminuant la taille des particules d'adsorbant utilisées dans le procédé de purification et ce, vraisemblablement grâce à l'amélioration de la cinétique d'adsorption des impuretés sur l'adsorbant.

Selon le cas, le procédé selon l'invention comporte l'une ou plusieurs des caractéristiques suivantes :
- lesdites particules ont une taille moyenne inférieure ou égale à 1.4 mm, de préférence inférieure ou égale à 1.3 mm, de préférence inférieure ou égale à 1.2 mm, avantageusement d'environ 0.8 mm à 1.1 mm.
- le fluide cryogénique est choisi parmi l'oxygène, l'argon, l'azote, l'hydrogène et l'hélium.
- le fluide cryogénique est à l'état liquide et/ou gazeux.
- au moins une partie des impuretés contenues dans le fluide cryogénique à purifier sont éliminées par adsorption ou par chimisorption sur les particules d'adsorbant.
- l'élimination des impuretés est réalisée à une température inférieure à environ -120°C, de préférence inférieure à -150°C,
- l'élimination des impuretés est réalisée à une pression de 10⁵ Pa à 3.10⁶ Pa.
- le temps de contact fluide cryogénique/particules d'adsorbant est inférieur ou égale à 300 s, de préférence de 70 à 200 s.
- que les particules d'adsorbant ont un diamètre de pore de 0.5 à 2,5 nm et/ou un volume de pore de 0.2 à 0.8 ml/g et/ou une surface spécifique de 100 à 1500 m²/g, de préférence de 600 à 850 m²/g.
- les particules d'adsorbant ont une forme de bille, d'extrudé, de concassé ou d'ellipse.
- les particules d'adsorbant sont en un matériau choisi parmi le gel de silice, la zéolite, les oxydes métalliques, telle l'hopcalite, et les matériaux carbonés.
- on récupère un fluide cryogénique purifié contenant au plus 1 ppb d'impuretés.
- le procédé est de type PSA (Pressure Swing Adsorption) ou TSA (Temperature Swing Adsorption), de préférence TSA.
- le fluide cryogénique contient, éventuellement, une ou des impuretés choisies dans le groupe formé par H₂, CO, CO₂ et H₂O, lesquelles sont également éliminées.
- l'adsorbant est de type zéolite, notamment X, LSX (pour Low Silica X) ou A, non-échangée ou échangée avec des cations métalliques, en particulier des cations calcium, argent, cuivre, cobalt, nickel, palladium ou platine.

L'invention va maintenant être décrite plus en détail à l'aide d'exemples et des figures annexées, donnés à titre illustratif mais non limitatif.

### Exemples

Les essais suivants visent à démontrer l'efficacité du procédé de purification par adsorption selon la présente invention.

Plus précisément, dans ces différents essais, les conditions de mise en oeuvre du procédé de purification sont les suivantes :
- fluide à purifier : argon liquide
- impuretés à éliminer : N₂O
- teneur en impuretés N₂O (en entrée) : 1 à 8.5 ppm
- température de purification : -185 ° C
- pression de purification : 8.10⁵ Pa
- temps de contact : 70 à 200 secondes
- débit de purification : environ 1 Nm³/h

En outre, l'adsorbant mis en oeuvre a les caractéristiques suivantes :
- nature de l'adsorbant : gel de silice
- forme des particules : sphères
- tailles moyennes des particules : 1.1, 2 ou 2.5 mm
- volume moyen de pore : environ 0.40 ml/g
- diamètre moyen de pore : 2 nm
- surface spécifique : 750 m²/g

### Essai n°1 : Epuration d'argon liquide sur des particules de 2.5 mm

Le flux d'argon liquide à purifier, lequel contient 8.5 ppm d'impuretés N₂O, est mis en contact avec des particules d'adsorbant ayant une taille moyenne de 2.5 mm.

Dans cet essai, le temps de contact est d'environ 130 secondes.

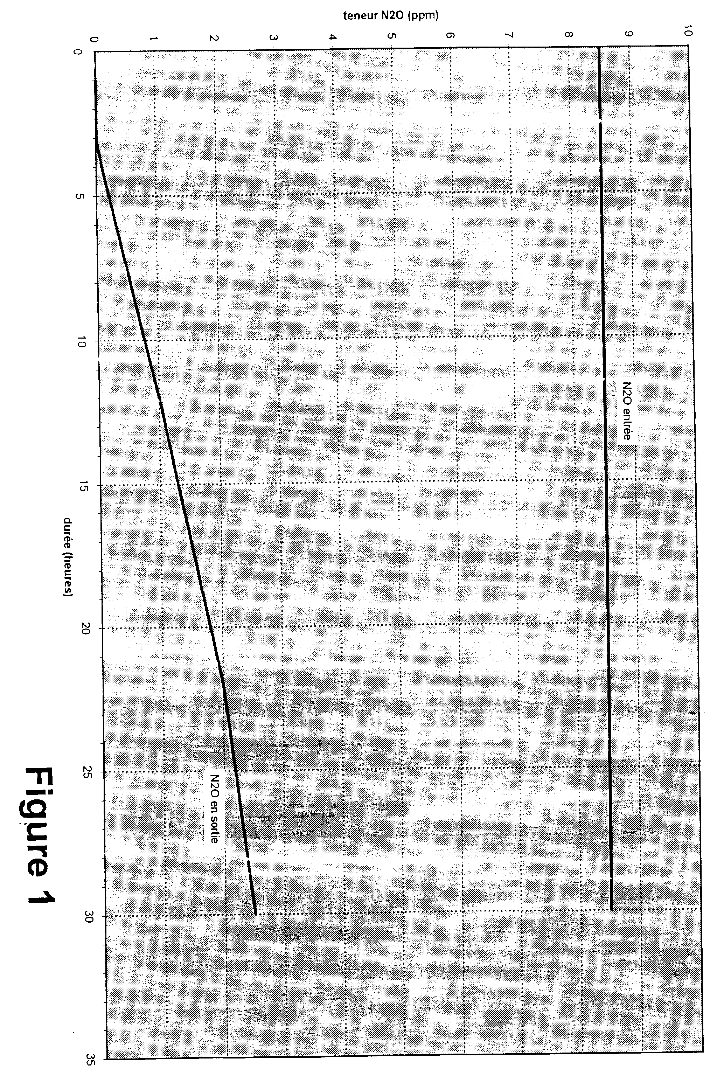

Les résultats obtenus ont été représentés sur la figure 1 et montrent clairement que la percée de N₂O survient après seulement 4 heures sur les particules de 2.5 mm.

La capacité d'arrêt au perçage est donc de 0.9 Ncc/g.

### Essai n°2 : Epuration d'argon liquide sur des particules de 2 mm

Le flux d'argon liquide à purifier, lequel contient 1 ppm d'impuretés N₂O, est mis en contact avec des particules d'adsorbant ayant une taille moyenne de 2 mm.

Dans cet essai, le temps de contact est d'environ 200 secondes.

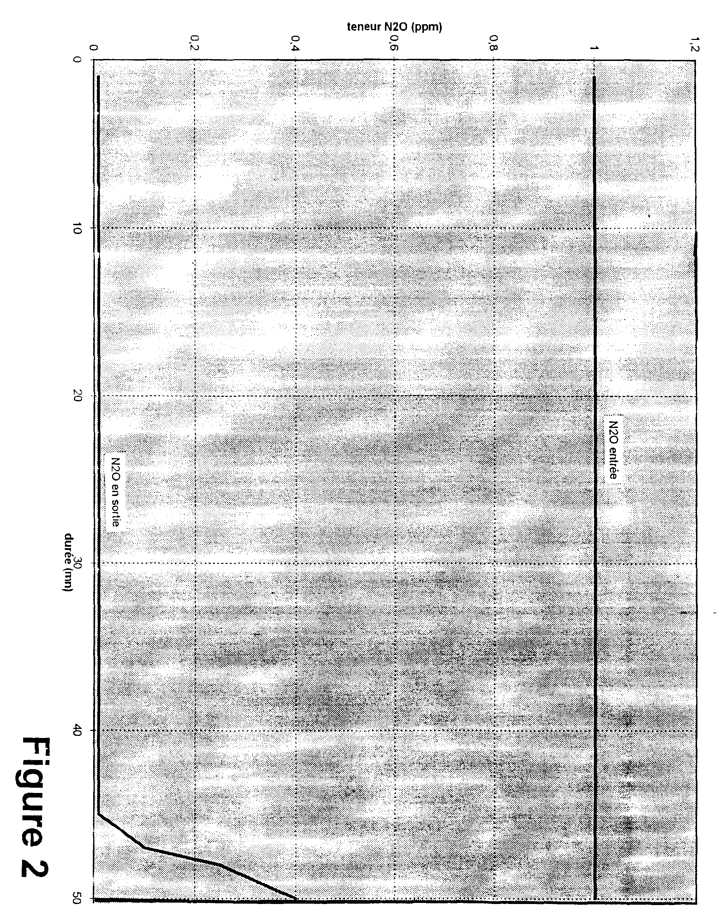

Les résultats obtenus ont été représentés sur la figure 2 et montrent clairement que la percée de N₂O survient après 47 heures sur les particules de 2 mm.

La capacité d'arrêt au perçage est donc de 0.85 Ncc/g.

### Essai n°3 : Eouration d'argon liquide sur des particules de 1.1 mm

Le flux d'argon liquide à purifier, lequel contient 1.5 ppm d'impuretés N₂O, est mis en contact avec des particules d'adsorbant ayant une taille moyenne de 1.1 mm.

Dans cet essai, le temps de contact est d'environ 70 secondes.

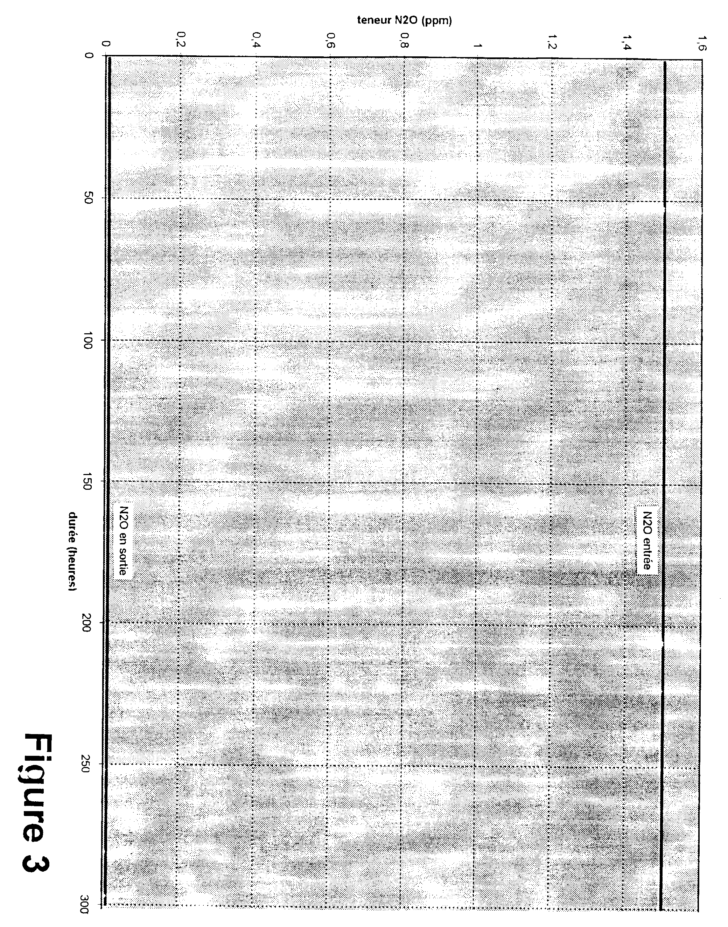

Les résultats obtenus ont été représentés sur la figure 3 et montrent clairement que la percée de N₂O ne survient qu'après 300 heures sur les particules de 1.1 mm.

La capacité d'arrêt au perçage est donc, dans cet exemple 3 selon l'invention, de plus de 22 Ncc/g. Les résultats des essais 1 à 3 sont résumés dans le tableau comparatif ci-après.

**Tableau comparatif**

| Essai n° | Taille des particules | Temps de contact | Temps de percée (en heure) | Capacité d'arrêt du N₂O (Ncc/g) |
|---|---|---|---|---|
| 1 | 2.5 mm | 130 sec | 4 | 0.90 |
| 2 | 2.0 mm | 200 sec | 47 | 0.85 |
| 3 | 1.1 mm | 70 sec | >300 | >22 |

Il apparaît, au vu des essais ci-avant, qu'une diminution de la taille des particules d'adsorbant (ici gel de silice) conduit à une amélioration de la cinétique d'adsorption et, de manière surprenante, à une purification plus efficace du fluide cryogénique (ici de l'argon liquide).

En effet, en diminuant la taille des particules d'adsorbant, on constate que le temps de percée augmente pour une capacité d'adsorption égale, c'est-à-dire qu'en utilisant des particules d'adsorbant de taille inférieure aux tailles classiquement utilisées, le temps de production s'allonge et ce, même lorsqu'on réduit le temps de contact entre le fluide à purifier et l'adsorbant.

De plus, on voit qu'une diminution de la taille de l'adsorbant d'un rapport d'environ 2 (cf. exemple 3) engendre, de manière inattendue et non prévisible, une augmentation de la capacité d'arrêt d'un facteur de l'ordre de 25, bien que le temps de contact ait été, par ailleurs, diminué d'un facteur 3 (cf. exemple 3).

Le procédé de purification selon la présente invention, basé sur une utilisation de particules d'adsorbant de petite taille (<1.5 mm) permet donc d'augmenter significativement la phase de production d'un cycle de purification, ce qui permet de réduire les coûts globaux du procédé, en diminuant la taille des réacteurs d'adsorption, la quantité d'adsorbant à utiliser, la fréquence de régénération de l'adsorbant et donc les coûts énergétiques et la quantité de fluide de régénération utilisée.

## Revendications

1. Procédé de purification d'un fluide cryogénique comportant des impuretés choisies parmi N₂O, CₙHₘ et NOₓ, dans lequel :
(a) on élimine au moins une partie des impuretés contenues dans le fluide cryogénique à purifier par mise en contact dudit fluide cryogénique à purifier avec des particules d'au moins un adsorbant, lesdites particules ayant une taille moyenne inférieure ou égale à 1.5 mm, et
(b) on récupère un fluide cryogénique purifié contenant moins de 100 ppb desdites impuretés.

2. Procédé selon la revendication 1, caractérisé en ce que lesdites particules ont une taille moyenne inférieure ou égale à 1.3 mm, de préférence inférieure ou égale à 1.2 mm, avantageusement d'environ 0.8 mm à 1.1 mm.

3. Procédé selon l'une des revendications 1 ou 2, caractérisé en ce que le fluide cryogénique est choisi parmi l'oxygène, l'argon, l'hydrogène, l'azote et l'hélium.

4. Procédé selon l'une des revendications 1 à 3, caractérisé en que le fluide cryogénique est à l'état liquide et/ou gazeux.

5. Procédé selon l'une des revendications 1 à 4, caractérisé en ce que au moins une partie des impuretés contenues dans le fluide cryogénique à purifier sont éliminées par adsorption ou par chimisorption sur les particules d'adsorbant.

6. Procédé selon l'une des revendications 1 à 5, caractérisé en ce que l'élimination des impuretés est réalisée à une température inférieure à -120°C, de préférence inférieure à -150°C, et/ou à une pression de 10⁵ Pa à 3.10⁶ Pa.

7. Procédé selon l'une des revendications 1 à 6, caractérisé en ce que le temps de contact fluide cryogénique/particules d'adsorbant est inférieur ou égale à 300 s, de préférence de 70 à 200 s.

8. Procédé selon l'une des revendications 1 à 7, caractérisé en ce que les particules d'adsorbant ont un diamètre de pore de 0.5 à 2,5 nm et/ou un volume de pore de 0.2 à 0.8 ml/g et/ou une surface spécifique de 100 à 1500 m²/g.

9. Procédé selon l'une des revendications 1 à 8, caractérisé en ce que les particules d'adsorbant ont une forme de bille, d'extrudé, de concassé ou d'ellipse.

10. Procédé selon l'une des revendications 1 à 9, caractérisé en ce que les particules d'adsorbant sont en un matériau choisi parmi le gel de silice, la zéolite, les oxydes métalliques et les matériaux carbonés.

11. Procédé selon l'une des revendications 1 à 10, caractérisé en ce qu'on récupère un fluide cryogénique purifié contenant au plus 10 ppb d'impuretés, de préférence au plus 1 ppb d'impuretés.
